# FASCICULE DE BREVET EUROPEEN

(11) **EP 2 058 487 B1**
(45) Date de publication et mention de la délivrance du brevet: **02.02.2011**
(21) Numéro de dépôt: 08167068.9
(22) Date de dépôt: 20.10.2008
(51) Int. Cl.: F02B 37/013, F02B 37/16

(54) **Dispositif de suralimentation pour moteur thermique équipé d'un boîtier répartiteur d'air de suralimentation**
Lader für Wärmekraftmotor, der mit einem Verteilergehäuse für die Ladeluft ausgestattet ist
Supercharging device for a heat engine equipped with a supercharging air distribution case

(30) Priorité: 07.11.2007 FR 0758862
(43) Date de publication de la demande: 13.05.2009
(73) Titulaire: Peugeot Citroën Automobiles SA, 78140 Vélizy-Villacoublay (FR)
(72) Inventeur: Perquia, Maximilien, 75017, Paris (FR)
(74) Mandataire: Ménès, Catherine

(56) Documents cités:
- EP-A- 1 178 191
- DE-A1- 10 230 934
- FR-A- 2 886 340
- US-A- 3 868 822

## Description

La présente invention concerne un dispositif de suralimentation pour moteur thermique.

Elle s'applique à un moteur thermique turbocompressé à deux étages de suralimentation.

Le document FR-A-2 886 340 décrit un moteur thermique à deux étages de suralimentation comportant respectivement deux compresseurs reliés en série respectivement un compresseur amont comprimant l'air d'admission à basse pression et un compresseur aval comprimant l'air d'admission à haute pression. Les deux compresseurs amont et aval sont ainsi disposés dans un circuit d'air d'admission ou ligne d'admission relié au collecteur d'admission du moteur thermique. Les compresseurs amont et aval sont associés respectivement à deux turbines basse pression et haute pression disposées dans un circuit d'échappement issu du collecteur d'échappement et pouvant être entraînées par des gaz d'échappement issus du moteur. Une vanne à trois voies est intégrée dans le circuit d'échappement et peut occuper une première position à laquelle la vanne envoie les gaz d'échappement vers la turbine haute pression et la turbine basse pression pour entraîner les deux compresseurs et une seconde position à laquelle la vanne envoie directement les gaz d'échappement à la turbine basse pression pour entraîner seulement le compresseur basse pression.

Cette conception connue de dispositif de suralimentation d'un moteur thermique se traduit par un réseau extrêmement encombrant de vanne et de tuyaux ou conduite métalliques ou en matière plastique raccordés aux différents composants du dispositif par des colliers ou des brides.

Le brevet US3868822 présente un dispositif pour améliorer la performance à bas régime des moteurs suralimentés par un turbocompresseur dans lequel le turbocompresseur est disposé sur une branche parallèle au conduit d'admission du moteur, et une vanne unidirectionnelle est disposée dans le conduit d'admission du moteur de sorte à orienter les gaz au travers du turbocompresseur à haut régime et à le bipasser au moins pour partie à bas régime.

La demande de brevet européen EP1178191 présente un turbocompresseur sur le carter duquel est directement fixé l'embout d'un conduit de dérivation et une vanne de dérivation du compresseur du turbocompresseur.

La présente invention a pour but de palier l'inconvénient ci-dessus des dispositifs de suralimentation connus pour moteur thermique en proposant un dispositif de suralimentation permettant d'optimiser son encombrement sans nuire à la qualité de liaison les uns aux autres des différents composants du dispositif.

A cet effet, selon l'invention, le dispositif de suralimentation pour moteur thermique comprenant un turbocompresseur basse pression composé d'un compresseur basse pression associé à une turbine basse pression, et un turbocompresseur haute pression composé d'un compresseur haute pression associé à une turbine haute pression, les compresseurs basse pression et haute pression étant reliés en série, est caractérisé en ce qu'il comprend un boîtier répartiteur d'air de suralimentation fixé directement au carter du compresseur haute pression et divisé intérieurement en une chambre amont raccordée en sortie du compresseur basse pression et communiquant directement avec l'entrée du compresseur haute pression et une chambre aval dans laquelle débouche directement la sortie du compresseur haute pression et pouvant être raccordée à un collecteur d'admission du moteur thermique, le boîtier répartiteur étant équipé d'un clapet interne piloté apte à séparer de façon étanche les deux chambres amont et aval ou mettre en communication l'une avec l'autre ces deux chambres.

De préférence, le boîtier répartiteur est divisé par une cloison et le clapet piloté comprend un volet monté à pivotement commandé à la cloison de façon à occuper une position fermée en prolongement de la cloison permettant la séparation étanche des deux chambres amont et aval ou une position ouverte de mise en communication des deux chambres.

Le volet est commandé par un actionneur, tel qu'un moteur électrique.

Le boîtier répartiteur est raccordé à la sortie du compresseur basse pression par une conduite de passage d'air comprimé et au collecteur d'admission par une conduite de sortie d'air comprimé.

Le boîtier peut être réalisé en une matière plastique ou en métal.

Le clapet peut être piloté par un calculateur.

Le boîtier est amoviblement fixé au carter du compresseur haute pression.

L'invention vise également un répartiteur d'air de suralimentation pour moteur thermique turbocompressé à deux étages de suralimentation, et qui est caractérisé en ce qu'il comprend une cloison interne de séparation du boîtier en deux chambres et un volet interne monté pivotant à la cloison de séparation de façon à pouvoir occuper une position fermée en prolongement de la cloison pour séparer de façon étanche les deux chambres ou une position ouverte permettant une mise en communication l'une avec l'autre des deux chambres.

Le boîtier comprend deux ouvertures permettant de raccorder l'une des chambres respectivement à la sortie d'un compresseur basse pression et à l'entrée d'un compresseur haute pression et deux autres ouvertures permettant de raccorder l'autre chambre respectivement à la sortie du compresseur haute pression et à un collecteur d'admission d'air comprimé du moteur thermique.

L'invention vise enfin un moteur thermique turbocompressé à deux étages pour véhicule, caractérisé en ce qu'il est équipé d'un dispositif de suralimentation tel que défini précédemment.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :
- la figure 1 est une vue schématique simplifiée d'un dispositif de suralimentation de l'invention pour moteur thermique ;
- la figure 2 est une vue semblable à celle de la figure 1 et montrant le dispositif de suralimentation à un état de fonctionnement différent ; et
- la figure 3 est une vue partielle en perspective d'un moteur thermique équipé du dispositif de suralimentation de l'invention.

En se reportant aux figures, la référence 1 désigne un moteur thermique pour un moteur de véhicule automobile équipé d'un dispositif de suralimentation à deux étages 2 comprenant un turbocompresseur basse pression et un turbocompresseur haute pression.

Le turbocompresseur basse pression est composé d'un compresseur basse pression 3 auquel est associée une turbine basse pression T3 permettant d'entraîner le compresseur basse pression 3 en rotation.

Le turbocompresseur haute pression est composé d'un compresseur haute pression 4 auquel est associée une turbine haute pression T4 entraînant le compresseur haute pression 4 en rotation.

Les compresseurs basse pression 3 et haute pression 4 sont reliés en série et le compresseur basse pression 3 a son entrée reliée à un conduit d'admission d'air extérieur 5, l'entrée du conduit 5 étant raccordée à un filtre à air, non représenté. La sortie du compresseur basse pression 3 peut être reliée, comme on le verra ultérieurement, à l'entrée du compresseur haute pression 4 par un conduit 6 d'admission d'air comprimé à basse pression.

La sortie du compresseur haute pression 4 peut être reliée, comme on le verra également ci-dessous, par un conduit d'admission d'air comprimé à haute pression 7 à un collecteur d'admission, non représenté, du moteur thermique 1.

Les conduits 5, 6, 7 constituent un circuit d'admission.

Selon l'invention, le dispositif de suralimentation est équipé d'un boîtier répartiteur d'air de suralimentation 8 amoviblement fixé, par exemple par des vis de fixation non représentées, directement au carter 4a du compresseur haute pression 4.

Le boîtier 8 est divisé intérieurement, par une cloison interne pleine 9, en une chambre amont 10 et une chambre aval 11.

Comme représenté, le boîtier 8 présente une forme générale de parallélépipède rectangle et la cloison interne 9 sépare le volume du boîtier 8 en deux chambres de volumes sensiblement égaux.

Le boîtier 8 est équipé intérieurement d'un clapet piloté 12 apte à occuper une première position permettant de séparer de façon étanche les deux chambres amont 10 et aval 11 ou l'une souhaitée de plusieurs positions permettant de mettre en communication l'une avec l'autre les deux chambres 10, 11.

Le clapet 12 peut être piloté par un calculateur suivant les cycles de combustion du moteur thermique, ce calculateur étant embarqué au véhicule.

De préférence, le clapet 12 comprend un volet 13 monté à pivotement commandé à la cloison 9 de façon à occuper une position fermée en prolongement de la cloison permettant la séparation étanche des deux chambres amont et aval 10, 11 ou une position ouverte d'inclinaison déterminée relativement au plan de la cloison 9 pour mettre en communication les deux chambre 10, 11.

A titre d'exemple, le volet 13 peut être monté articulé au bord d'extrémité de la cloison 9 de façon que le bord libre opposé du volet 13 puisse venir en appui d'étanchéité, à sa position de fermeture, sur la face interne de la paroi 8a du boîtier 8 opposée à la paroi parallèle 8b de ce boîtier amoviblement fixée au carter du compresseur haute pression 4.

Le clapet 12 comprend en outre un actionneur 14 pouvant être commandé par le calculateur pour assurer le pivotement du volet 13 entre ses positions de fermeture et d'ouverture.

L'actionneur 14 peut être constitué par un petit moteur électrique dont l'arbre d'entraînement est relié à l'axe de pivotement du volet 13 par au moins deux pignons en engrènement l'un avec l'autre pour permettre un pivotement de ce volet à des positions angulaires souhaitées précises relativement à la cloison 9.

Le conduit d'admission 6 relié en sortie du compresseur basse pression 3 est raccordé à une ouverture d'entrée du boîtier 8 communiquant avec la chambre amont 10. La paroi 8b du boîtier 8 comporte une ouverture débouchant directement dans l'ouverture d'entrée d'air du compresseur haute pression 4. La paroi 8b du boîtier 8 comprend également une deuxième ouverture communiquant directement avec l'ouverture de sortie du compresseur haute pression 4. Enfin, le boîtier 8 comporte dans sa paroi transversale à la paroi 8b et opposée à celle raccordée au conduit d'admission 6, une ouverture à laquelle est raccordé le conduit d'admission 7.

Le boîtier 8 peut être réalisé en métal ou en une matière plastique rigide en fonction des températures de fonctionnement.

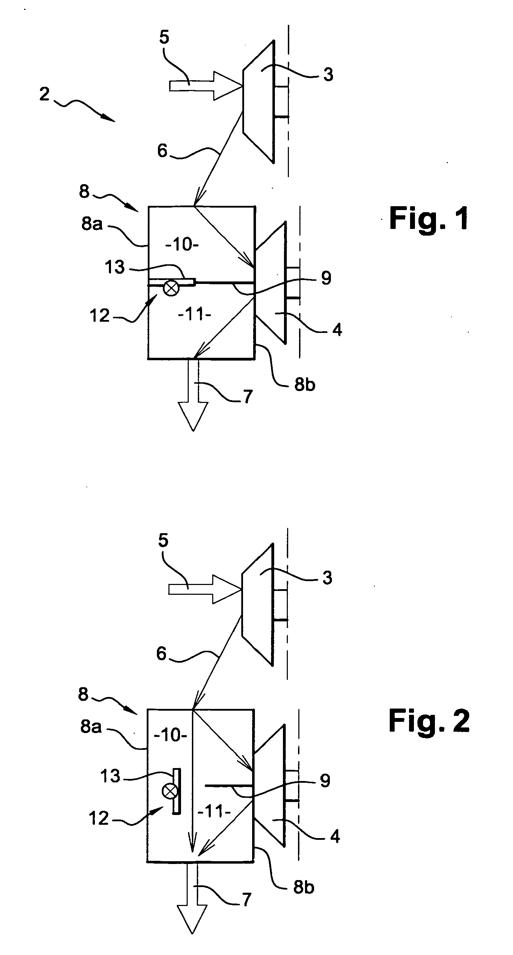

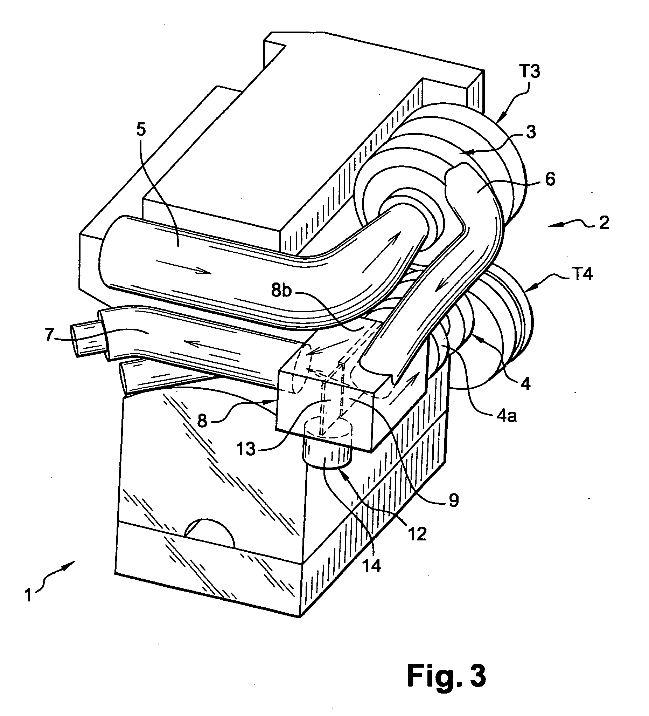

Les figures 1 et 3 représentent l'état du dispositif de suralimentation selon lequel le clapet 12 est piloté de manière à occuper sa position de séparation étanche des deux chambres amont et aval 10, 11. A cet état, l'air de suralimentation circule comme indiqué par les différentes flèches en traits forts à ces figures. Ainsi, l'air comprimé basse pression sortant du compresseur 3 pénètre dans la chambre amont 10, traverse le compresseur 4 pour remplir la chambre aval 11 d'air comprimé à haute pression sortant du compresseur 4 et envoyé au collecteur d'admission du moteur au travers du conduit 7. Les deux compresseurs 3, 4 sont totalement reliés en série l'un à l'autre.

La figure 2 représente l'état selon lequel le clapet est piloté à sa position d'ouverture libérant pratiquement le passage entre le bord libre de la cloison 9 et la paroi 8a du boîtier 8 et à laquelle le volet 13 est perpendiculaire à la cloison 9. A titre d'exemple, le passage ainsi libéré correspond sensiblement à la largeur de la cloison à partir de la paroi 8b du boîtier 8. Ainsi, pratiquement tout l'air d'admission comprimé à basse pression par le compresseur 3 traverse les deux chambres 10, 11 pour ressortir au travers du conduit 7, très peu d'air étant comprimé à haute pression par le compresseur 4.

Bien entendu, le volet 13 du clapet 12 peut occuper d'autres positions angulaires relativement à la cloison 9, autre que celle perpendiculaire à celle-ci, suivant les signaux de commande appliqués par le calculateur au clapet 12 pour répartir l'air de suralimentation en deux flux, l'un traversant les deux chambres 10, 11 et l'autre traversant le compresseur haute pression 4 pour envoyer dans le conduit 7 de l'air d'admission comprimé à une valeur intermédiaire entre la basse pression fournie par le compresseur 3 et la haute pression fournie par le compresseur 4.

Les différents conduits d'admission constituant le circuit d'admission sont reliés au boîtier répartiteur 8 par l'intermédiaire de colliers de fixation.

Le dispositif de suralimentation de l'invention permet d'orienter selon les cas de fonctionnement du moteur les écoulements d'air de suralimentation relatifs au fonctionnement en série des deux turbocompresseurs. Ce dispositif s'applique en particulier, mais de manière non limitative, à des moteurs diesels.

Le dispositif de suralimentation de l'invention présente les avantages suivants :
- réalisation des cheminements d'air d'alimentation par l'intermédiaire d'un seul organe répartiteur,
- simplification des interfaces de montage,
- grain en encombrement et implantation,
- facilité de montage,
- gain économique,
- renforcement de l'étanchéité grâce à la précision du procédé de fabrication par moulage du boîtier répartiteur.

## Revendications

1. Dispositif de suralimentation pour moteur thermique comprenant un turbocompresseur basse pression composé d'un compresseur basse pression (3) associé à une turbine basse pression, et un turbocompresseur haute pression composé d'un compresseur haute pression (4) associé à une turbine haute pression, les compresseurs basse pression et haute pression (3,4) étant reliés en série, **caractérisé en ce qu'**il comprend un boîtier répartiteur d'air de suralimentation (8) fixé directement au carter (4a) du compresseur haute pression (4) et divisé intérieurement en une chambre amont (10) raccordée en sortie du compresseur basse pression (3) et communiquant directement avec l'entrée du compresseur haute pression (4) et une chambre aval (11) dans laquelle débouche directement la sortie du compresseur haute pression (4) et pouvant être raccordée à un collecteur d'admission du moteur thermique, le boîtier répartiteur (8) étant équipé d'un clapet interne piloté (12) apte à séparer de façon étanche les deux chambres amont et aval (10,11) ou mettre en communication l'une avec l'autre ces deux chambres.

2. Dispositif selon la revendication 1, **caractérisé en ce que** le boîtier répartiteur (8) est divisé par une cloison (9) et le clapet piloté (12) comprend un volet (13) monté à pivotement commandé à la cloison (9) de façon à occuper une position fermée en prolongement de la cloison (9) permettant la séparation étanche des deux chambres amont et aval (10,11) ou une position ouverte de mise en communication des deux chambres (10,11).

3. Dispositif selon la revendication 2, **caractérisé en ce que** le volet (13) est commandé par un actionneur (14), tel qu'un moteur électrique.

4. Dispositif selon l'une des revendications précédentes, **caractérisé en ce que** le boîtier répartiteur (8) est raccordé à la sortie du compresseur basse pression (4) par une conduite de passage d'air comprimé (6) et au collecteur d'admission par une conduite de sortie d'air comprimé(7).

5. Dispositif selon l'une des revendications précédentes, **caractérisé en ce que** le boîtier (8) est réalisé en une matière plastique ou en métal.

6. Dispositif selon l'une des revendications 2 à 5, **caractérisé en ce que** le clapet (12) peut être piloté par un calculateur.

7. Dispositif selon l'une des revendications précédentes, **caractérisé en ce que** le boîtier (8) est amoviblement fixé au carter (4a) du compresseur haute pression (4).

8. Moteur thermique turbocompressé (1) à deux étages pour véhicule, **caractérisé en ce qu'**il est équipé d'un dispositif de suralimentation (2) tel que défini dans l'une quelconque des revendications 1 à 7.

## Claims

1. Supercharging device for a heat engine, comprising a low pressure turbocompressor comprised of a low pressure compressor (3) associated with a low pressure turbine, and a high pressure turbocompressor composed of a high pressure compressor (4) associated with a high pressure turbine, the low pressure and high pressure compressors (3, 4) being connected in series, **characterized in that** it comprises a supercharging air distributing case (8) fixed directly to the casing (4a) of the high pressure compressor (4) and divided internally into an upstream chamber (10) connected at the outlet of the low pressure compressor (3) and communicating directly with the inlet of the high pressure compressor (4), and a downstream chamber (11) in which the outlet of the high pressure compressor (4) opens directly, and being able to be connected to an inlet manifold of the heat engine, the distributing case (8) being equipped with a driven internal valve (12) suited to separate in a tight manner the two upstream and downstream chambers (10, 11) or to place these two chambers in communication with each other.

2. Device according to Claim 1, **characterized in that** the distributing case (8) is divided by a partition (9) and the driven valve (12) comprises a flap (13) pivotably mounted in a controlled manner with respect to the partition (9) so as to occupy a closed position in extension of the partition (9), permitting the tight separation of the two upstream and downstream chambers (10, 11), or an open position for placing these two chambers (10, 11) in communication.

3. Device according to Claim 2, **characterized in that** the flap (13) is controlled by an actuator (14), such as an electric motor.

4. Device according to one of the preceding claims, **characterized in that** the distributing case (8) is connected to the outlet of the low pressure compressor (4) by a duct (6) for the passage of compressed air, and to the inlet manifold by a duct (7) for the outlet of compressed air.

5. Device according to one of the preceding claims, **characterized in that** the case (8) is made of a plastic material or of metal.

6. Device according to one of Claims 2 to 5, **characterized in that** the valve (12) can be driven by a computer.

7. Device according to one of the preceding claims, **characterized in that** the case (8) is detachably fixed to the casing (4a) of the high pressure compressor (4).

8. Two-stage turbocompressed heat engine (1) for a vehicle, **characterized in that** it is equipped with a supercharging device (2) as defined in any one of Claims 1 to 7.

## Patentansprüche

1. Vorrichtung zum Aufladen für Verbrennungsmotor, der einen Niederdruck-Turbolader aufweist, der aus einem Niederdruckverdichter (3), der mit einer Niederdruckturbine verbunden ist, und einem Hochdruck-Turboauflader, der aus einem Hochdruckkompressor (4), der mit einer Hochdruckturbine verbunden ist, besteht, wobei der Niederdruck- und der Hochdruckkompressor (3, 4) in Serie geschaltet sind, **dadurch gekennzeichnet, dass** sie ein Aufladeluft-Verteilergehäuse (8) aufweist, das direkt an dem Gehäuse (4a) des Hochdruckkompressors (4) befestigt und innen in eine stromaufwärtige Kammer (10), die am Ausgang des Niederdruckkompressors (3) angeschlossen ist und direkt mit dem Eingang des Hochdruckkompressors (4) kommuniziert, und eine stromabwärtige Kammer (11), in die der Ausgang des Hochdruckkompressors (4) direkt mündet und die an einen Einlasssammler des Verbrennungsmotors angeschlossen werden kann, geteilt ist, wobei das Verteilergehäuse (8) mit einem gesteuerten internen Ventil (12) versehen ist, das die stromaufwärtige und die stromabwärtige Kammer (10, 11) dicht trennen oder miteinander in Kommunikation versetzen kann.

2. Vorrichtung nach Anspruch 1, **dadurch gekennzeichnet, dass** das Verteilergehäuse (8) durch eine Wand (9) geteilt ist, und dass das gesteuerte Ventil (12) eine Klappe (13) aufweist, die mit gesteuertem Schwenken an der Wand (9) derart installiert ist, dass sie eine geschlossene Position in der Verlängerung der Wand (9) einnimmt, die das dichte Trennen der stromaufwärtigen und der stromabwärtigen Kammer (10, 11), oder eine offene Position zum Herstellen der Kommunikation der zwei Kammern (10, 11) erlaubt.

3. Vorrichtung nach Anspruch 2, **dadurch gekennzeichnet, dass** die Klappe (13) von einem Stellantrieb (14), wie zum Beispiel von einem Elektromotor gesteuert wird.

4. Vorrichtung nach einem der vorhergehenden Ansprüche, **dadurch gekennzeichnet, dass** das Verteilergehäuse (8) an den Ausgang des Niederdruckkompressors (4) durch eine Druckluft-Durchgangsleitung (6) und an dem Einlasssammler durch eine Druckluft-Ausgangsleitung (7) angeschlossen ist.

5. Vorrichtung nach einem der vorhergehenden Ansprüche, **dadurch gekennzeichnet, dass** das Gehäuse (8) aus einem Kunststoff oder aus Metall hergestellt ist.

6. Vorrichtung nach einem der Ansprüche 2 bis 5, **dadurch gekennzeichnet, dass** die Klappe (12) von einem Rechner gesteuert werden kann.

7. Vorrichtung nach einem der vorhergehenden Ansprüche, **dadurch gekennzeichnet, dass** das Gehäuse (8) abnehmbar an der Verkleidung (4a) des Hochdruckkompressors (4) befestigt ist.

8. Turbolader-Verbrennungsmotor (1) mit zwei Stufen für Fahrzeug, **dadurch gekennzeichnet, dass** er mit einer Vorrichtung zum Aufladen (2), wie sie in einem der Ansprüche 1 bis 7 definiert ist, ausgerüstet ist.
